Europäisches Patentamt

European Patent Office

Office européen des brevets

(19)

(11) Numéro de publication: **0 276 612**
**A1**

## (12) DEMANDE DE BREVET EUROPEEN

(21) Numéro de dépôt: 87402972.1

(22) Date de dépôt: 23.12.87

(51) Int. Cl.⁴: **B64C 25/44**

(30) Priorité: 26.12.86 FR 8618198

(43) Date de publication de la demande:
**03.08.88 Bulletin 88/31**

(84) Etats contractants désignés:
**GB SE**

(71) Demandeur: **MESSIER-HISPANO-BUGATTI**
**5 rue Louis Lejeune**
**F-92120 Montrouge(FR)**

Demandeur: **THOMSON-CSF**
**173, Boulevard Haussmann**
**F-75379 Paris Cédex 08(FR)**

(72) Inventeur: **Guichard, Jean**
**15 rue Louis Blanc**
**F-92250 La Garenne Colombes(FR)**
Inventeur: **Favre, Christian**
**2 square Roger Salengro**
**F-91300 Massy(FR)**
Inventeur: **Potron, Marc**
**9 square Jean Allemane**
**F-91000 Evry(FR)**
Inventeur: **Renard, Jean-François**
**Résidence Buffon 35 rue de l'église**
**F-75015 Paris(FR)**

(74) Mandataire: **Fruchard, Guy et al**
**CABINET BOETTCHER 23, rue la Boétie**
**F-75008 Paris(FR)**

(54) **Dispositif de commande de freinage d'avion.**

(57) Le dispositif selon l'invention comporte une unité de traitement (1) à logique programmée comprenant une série d'entrées de données (A-J) relatives à la position de certains organes de l'avion ou aux conditions de déplacement de l'avion et une série de sorties (S1-S3) de commande de freinage, l'une au moins (S3) de ces sorties étant une sortie de mise en service reliée à une électrovanne de mise en service (4) disposée sur une ligne d'alimentation générale (5) en fluide de freinage; il est caractérisé en ce qu'il comporte une unité de contrôle (3) à logique câblée ayant une série d'entrées associées à des données essentielles pour la mise en oeuvre du freinage et une sortie associée à la sortie de mise en service de l'unité de traitement en tant qu'entrées d'une porte ET (2) dont la sortie est reliée à l'électrovanne de mise en service (4).

## Dispositif de commande de freinage d'avion

La présente invention concerne un dispositif de commande de freinage d'avion.

On sait que la capacité de calcul grandissante des microprocesseurs actuels permet d'intégrer un nombre croissant de fonctions dans un même calculateur et donc d'intégrer toutes les fonctions de freinage dans un même calculateur. Pour cela il est nécessaire de prévoir dans les dispositifs de commande de freinage d'avion une unité de traitement à logique programmée comportant une série d'entrées de données relatives à la position de certains organes de l'avion ou aux conditions de déplacement de l'avion et une série de sorties de commande de freinage associées à différents organes du circuit de freinage. Par ailleurs, il est généralement nécessaire de prévoir sur une ligne d'alimentation générale du circuit de freinage une électrovanne de mise en service qui peut être maintenue fermée dans certaines configurations afin d'éviter un freinage intempestif, par exemple au décollage lorsque l'avion a dépassé un seuil de vitesse au-delà duquel il ne serait plus possible de le freiner avant l'extrémité de la piste. L'électrovanne de mise en service est reliée à au moins l'une des sorties de l'unité de traitement pour autoriser l'alimentation du circuit de freinage seulement dans les conditions où le freinage est requis. L'utilisation d'une logique programmée pose cependant un problème en raison de la grande difficulté de garantir qu'une erreur de logiciel entraînant un freinage intempestif soit extrêmement improbable.

La solution adoptée actuellement pour rendre un freinage intempestif extrêmement improbable à la suite d'une erreur de logiciel consiste à doubler l'unité de traitement à logique programmée par une seconde unité à logique programmée réalisée par une équipe de programmeurs différente de l'équipe réalisant la première unité, la probabilité qu'une même erreur de logiciel soit effectuée par les deux équipes étant alors suffisamment faible pour qu'un freinage intempestif soit considéré comme extrêmement improbable. Toutefois, le doublement de l'unité de traitement à logique programmée représente un coût considérable qui grève de façon sérieuse le prix de revient d'un avion.

Un but de l'invention est de proposer un dispositif de commande de freinage d'un coût plus réduit que les dispositifs existants et permettant néanmoins de garantir qu'un freinage intempestif soit extrêmement improbable.

En vue de la réalisation de ce but, on prévoit selon l'invention un dispositif de commande de freinage d'avion ayant une unité de traitement à logique programmée telle qu'invoquée ci-dessus et comportant en outre une unité de contrôle à logique câblée ayant une série d'entrées associées à des données essentielles pour la mise en oeuvre du freinage et une sortie associée à la sortie de mise en service de l'unité de traitement en tant qu'entrées d'une porte ET dont la sortie est reliée à l'électrovanne de mise en service.

Ainsi, l'utilisation d'une logique câblée permet d'effectuer des essais afin de s'assurer que le câblage est convenablement réalisé et la limitation du traitement par la logique câblée à des données essentielles pour la mise en oeuvre du freinage permet de minimiser le coût de l'unité de contrôle et donc d'abaisser le coût général de l'installation.

Selon une version avantageuse de l'invention, au moins certaines des entrées de l'unité de contrôle sont reliées aux entrées correspondantes de l'unité de traitement. Ainsi, on évite un double prélèvement des données, ce qui minimise à la fois le coût de l'installation et le risque d'erreurs sur le prélèvement des données.

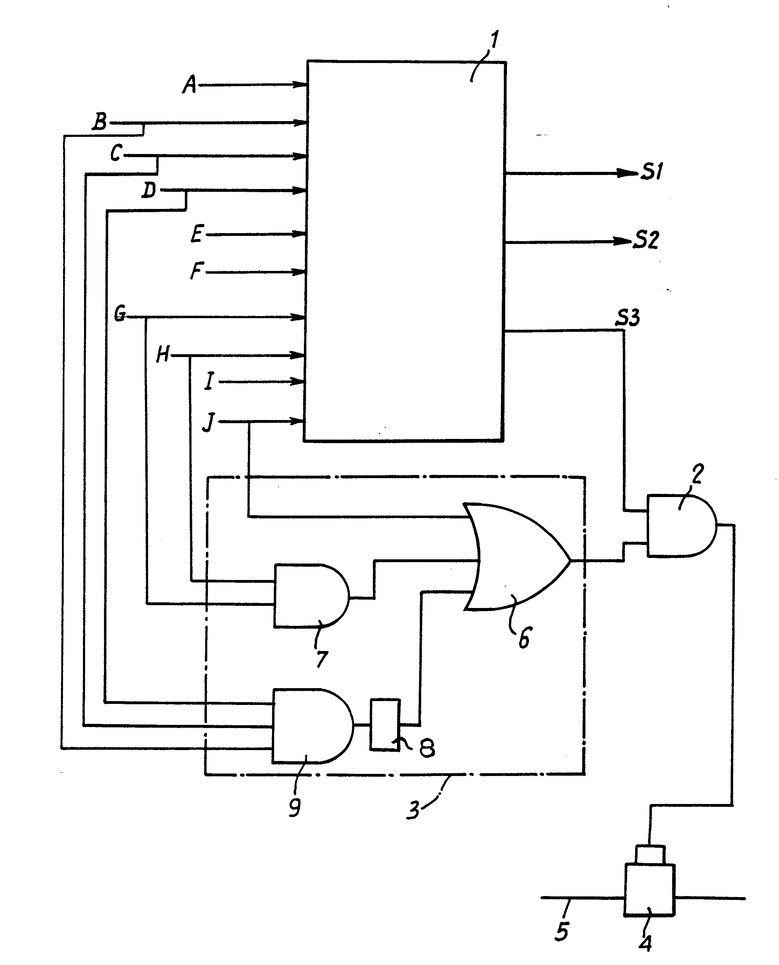

D'autres caractéristiques et avantages de l'invention ressortiront à la lecture de la description qui suit d'un mode de réalisation particulier non limitatif de l'invention, en liaison avec la figure unique ci-jointe qui représente un diagramme - schématique de l'invention.

En référence à la figure, le dispositif de commande de freinage d'avion selon l'invention comporte une unité de traitement à logique programmée 1 comprenant une série d'entrées de données référencées A à J. Les données d'entrées de l'unité de traitement 1 sont des données relatives à la position de certains organes de l'avion ou aux conditions de déplacement de l'avion. Par exemple, les entrées de l'unité de traitement 1 sont représentatives des données suivantes :

A. pression des circuits de freinage,

B. position de la manette de train d'atterrissage,

C. détection de la situation en vol ou au sol de l'avion, par exemple par détection du degré d'enfoncement des amortisseurs du train d'atterrissage,

D. détection de déverrouillage du train d'atterrissage,

E. vitesse de l'avion,

F. vitesse des roues,

G. position de l'organe d'armement du freinage automatique,

H. position des volets hypersustentateurs,

I. position de la manette de frein de parking,

J. position des pédales de frein.

L'unité de traitement logique comprend une série de sorties de commande de freinage référencées S1 à S3, servant à commander les organes du circuit de freinage. Par exemple, dans le cas représenté, la sortie S1 sert à envoyer un signal de consigne aux servovalves du circuit de freinage tandis que la sortie S2 sert à commander la position des volets hypersustentateurs.

Par ailleurs, la sortie S3 est reliée à l'une des entrées d'une porte ET 2 dont l'autre entrée est reliée à une unité de contrôle à logique câblée généralement référencée en 3, et dont la sortie est reliée à une électrovanne de mise en service 4 disposée sur une ligne d'alimentation 5 du circuit de freinage.

Dans le mode de réalisation représenté, l'unité de contrôle à logique câblée comporte une porte OU 6 ayant trois entrées. La première entrée est reliée à la ligne d'entrées J de l'unité de traitement 1; la seconde entrée est reliée à une porte ET 7 comportant elle-même deux entrées respectivement reliées aux entrées G et H de l'unité de traitement 1; la troisième entrée de la porte OU 6 est reliée à la sortie d'un temporisateur 8 lui-même monté à la sortie d'une porte ET 9 ayant trois entrées respectivement reliées aux entrées B, C et D de l'unité de traitement 1.

Ainsi, l'ouverture de l'électrovanne 4, et donc l'alimentation du circuit de freinage, n'est autorisée que pour une situation de fait correspondant soit à la manoeuvre des pédales de freinage, soit à l'armement du freinage automatique conjugué avec une commande de sortie des volets hypersustentateurs, soit encore à la manette de train d'atterrissage en position relevée combinée avec une détection d'une situation de vol de l'avion et une détection de train déverrouillé, cette dernière combinaison permettant d'assurer pendant un temps donné un freinage des roues afin d'éviter que les roues ne soient introduites dans la soute tout en continuant à tourner.

Bien entendu l'invention n'est pas limitée au mode de réalisation décrit et on peut y apporter des variantes de réalisation sans sortir du cadre de l'invention. En particulier, on peut, pour des raisons pratiques, être amené à connecter les entrées de l'unité de traitement et de l'unité de contrôle à des capteurs différents. Par exemple, dans le cas d'une unité de traitement fonctionnant à partir de capteurs numériques et d'une unité de contrôle fonctionnant avec des portes analogiques, il pourra être nécessaire d'utiliser deux capteurs différents pour une ou plusieurs des données d'entrées.

De même, le nombre et la combinaison des données d'entrées de l'unité de traitement et/ou de l'unité de contrôle ne sont pas limités et pourront être modifiés en fonction du cahier des charges imposé par le constructeur de l'avion ou les utilisateurs.

**Revendications**

1. Dispositif de commande de freinage d'avion comportant une unité de traitement (1) à logique programmée comprenant une série d'entrées de données (A-J) relatives à la position de certains organes de l'avion ou aux conditions de déplacement de l'avion et une série de sorties (S1-S3) de commande de freinage, l'une au moins (S3) dé ces sorties étant une sortie de mise en service reliée à une électrovanne de mise en service (4) disposée sur une ligne d'alimentation générale (5) en fluide de freinage, caractérisé en ce qu'il comporte une unité de contrôle (3) à logique câblée ayant une série d'entrées associées à des données essentielles pour la mise en oeuvre du freinage et une sortie associée à la sortie de mise en service de l'unité de traitement en tant qu'entrées d'une porte ET (2) dont la sortie est reliée à l'électrovanne de mise en service (4).

2. Dispositif de commande de freinage d'avion selon la revendication 1 caractérisé en ce qu'au moins certaines des entrées de l'unité de contrôle (3) sont reliées aux entrées correspondantes de l'unité de traitement (1).

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A-2 127 507 (TEVES GmbH)<br>* Page 1, lignes 1-43,77-125; page 4, lignes 63-76; revendications 1-6,16; figure 1 * | 1,2 | B 64 C 25/44 |
| | --- | | |
| A | FR-A-2 556 313<br>(MESSIER-HISPANO-BUGATTI S.A.)<br>* Page 1, lignes 1-16; page 3, lignes 8-19; page 6, ligne 25 - page 8, ligne 26; figure 2 * | 1,2 | |
| | --- | | |
| A | US-A-3 880 475 (BOOHER)<br>* Colonne 1, lignes 7-18,32-45; colonne 3, lignes 22-33; colonne 5, ligne 38 - colonne 6, ligne 6; colonne 6, lignes 29-38; revendications 1,4,5,8; figure 1 * | 1,2 | |
| | --- | | |
| A | EP-A-0 028 552<br>(MESSIER-HISPANO-BUGATTI S.A.)<br>* Page 2, lignes 11-20; page 3, ligne 15 - page 4, ligne 12; page 6, lignes 8-25; page 17, lignes 2-15; revendications 1,8; figure 1 *<br>----- | 1,2 | DOMAINES TECHNIQUES RECHERCHES (Int. Cl.4)<br><br>B 64 C<br>B 60 T |

Le présent rapport a été établi pour toutes les revendications

| Lieu de la recherche | Date d'achèvement de la recherche | Examinateur |
|---|---|---|
| LA HAYE | 31-03-1988 | GEYER J.L. |